# EUROPEAN PATENT APPLICATION

(11) **EP 2 703 929 A1**
(43) Date of publication of application: **05.03.2014**
(21) Application number: 13178392.0
(22) Date of filing: 29.07.2013
(51) Int. Cl.: G05D 11/13, G05D 7/06

(54) **Apparatus for dosing neutral glazes**

(30) Priority: 04.09.2012 IT MO20120208
(71) Applicant: Colourservice S.R.L., 42019 Scandiano, Reggio Emilia (IT)
(72) Inventor: Sichi, Marco, 41028 SERRAMAZZONI, MODENA (IT)
(74) Representative: Casadei, Giovanni

(57) **Abstract**

An apparatus for dosing neutral glazes comprises a frame (1) to which a pump (3) and a volumetric mass measuring device (4) are fixed, said pump (3) being able to be connected to a storage tank of a neutral glaze by a intake conduit (5), said volumetric mass measuring device (4) being connected to the pump outlet (3) by a connecting conduit (6) and being further connected to a dispensing conduit (7).

## Description

The present invention concerns an apparatus for dosing neutral glazes to create coloured glazes to be used for glazing ceramic products.

In the state of the art the practice is known of preparing coloured glazes by mixing a neutral base glaze with suitable coloured pigments. The mixing of the neutral glaze with the pigments takes place in a device called a colorimeter, which doses the pigments which are to be mixed with the base glaze to obtain the desired coloured glaze.

The colorimeter must be connected to the storage tanks for the base glazes and feeds a container, also called a tub, with a capacity of 1000-1500 litres, which feeds the reservoirs of the glazing machines. The colorimeter comprises a dosing head for the pigments, which must have a capacity equal to the capacity of the tub.

The colorimeter is therefore an apparatus of large dimensions, with complex permanent connections to the storage tanks.

The present invention has the object of providing an apparatus for preparing coloured glazes which is of small dimensions and does not necessitate complex permanent connections to the storage tanks for neutral glazes.

The object of the invention is achieved with an apparatus according to claim 1.

Thanks to the invention an apparatus is obtained having dimensions much smaller than apparatuses known from the state of the art, which does not necessitate permanent connections to the storage tanks for neutral glazes and can furthermore be easily moved, according to need, and makes it possible to achieve precise dosing of the neutral glaze to obtain the desired coloured glazes, according to pre-established formulas.

An example of embodiment of an apparatus according to the invention is described below with reference to the attached drawings, in which:

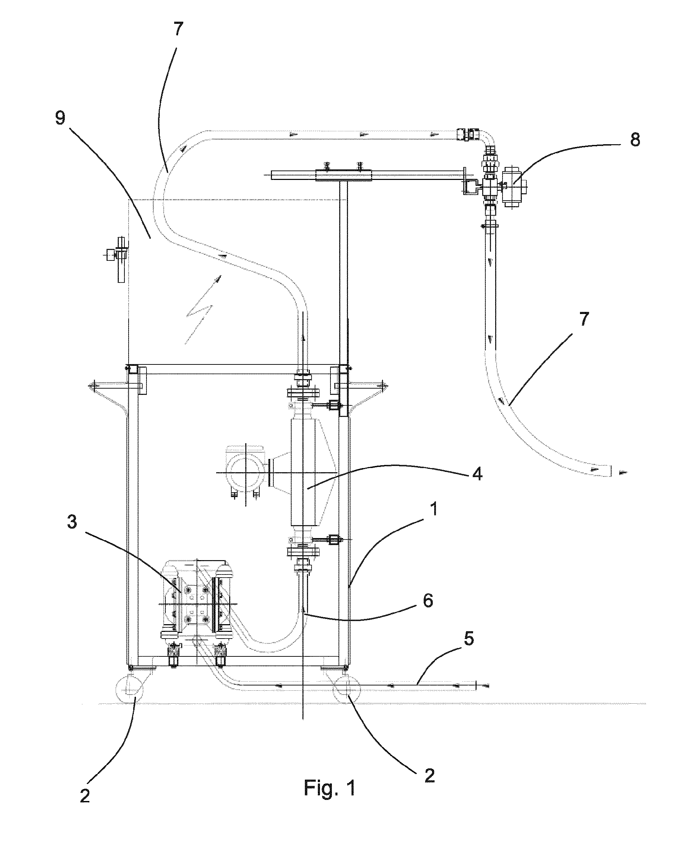

Figure 1 is a view in elevation of an apparatus according to the invention;

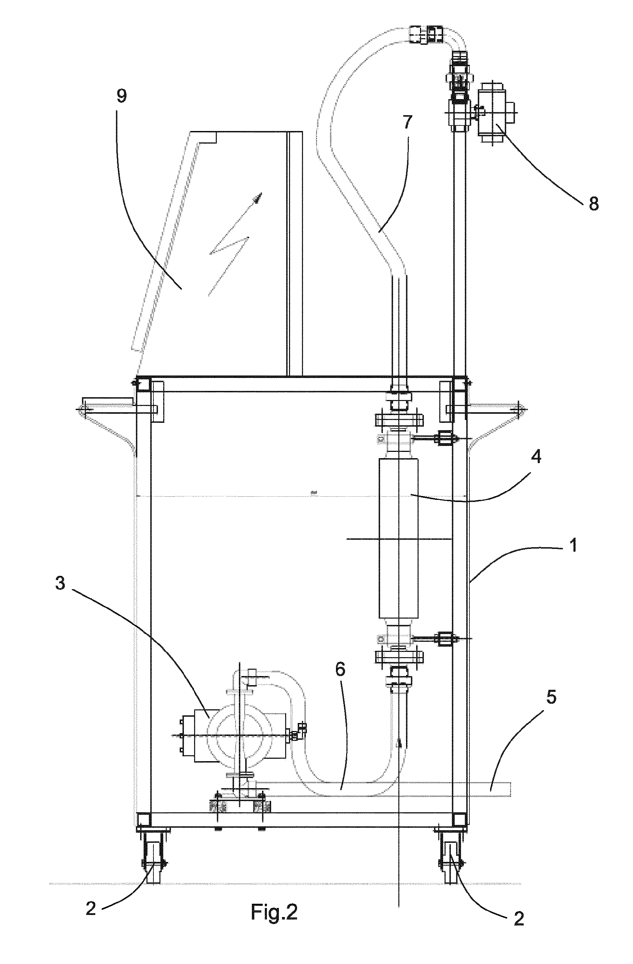

Figure 2 is a view from the left of figure 1.

The apparatus according to the invention comprises a frame 1, equipped with wheels 2 to allow the apparatus to be easily moved. The frame 1 has fixed to it a pump 3, for example a pneumatic, peristaltic, or gear pump, to whose intake is connected an intake conduit 5, through which the pump 3 sucks in the neutral glaze to be dosed from a storage tank, not depicted.

The pump outlet is connected by means of a connecting conduit 6 to a mass measurer 4, i.e. a device suitable for measuring the volumetric mass of the neutral glaze. Finally, the mass measurer 4 is connected to a dispensing duct 7, equipped with a dosing valve 8, for example a solenoid valve, through which is dosed the quantity of neutral glaze required for creating the desired coloured glaze.

The apparatus is equipped furthermore with a control panel 9, by means of which the pump 3 and the solenoid valve 8 are operated. The control panel 9 is equipped with a management software for making up the various formulas of coloured glazes which may be required. When it is necessary to prepare a pre-established quantity of glaze coloured according to a predetermined formula, an operator will, manually or by means of a doser, dose into a receptacle designed to contain the quantity of glaze required, the quantities of coloured pigments required on the basis of the formula for the glaze to be prepared and the quantity of glaze required. After having dosed the pigments, the operator brings the apparatus according to the invention into proximity with the storage tank containing the neutral glaze required and connects the storage tank to the intake of the pump 3 by means of the intake conduit 5, while the outlet conduit 7 is connected to the receptacle into which the pigments have been dosed.

The operator then selects, in the management software of the control panel 9, the formula of the coloured glaze for which the pigments have been dosed, and starts up the apparatus according to the invention. When the apparatus according to the invention is started up, the pump 3 is operated and sucks the neutral glaze from the storage tank to which the pump has been connected and, via the connecting conduit 6, makes it circulate in the mass measurer 4 for a time sufficient to measure the volumetric mass of the glaze.

On the basis of the volumetric mass value measured, the management software calculates the percentages of dry matter and liquid present in the base glaze and, by operating the solenoid valve 8, doses into the receptacle containing the pigments the quantity of base glaze required depending on the formula of the coloured glaze to be created, so that the percentages of dry matter, including the pigments, and of liquid in the coloured glaze obtained correspond with great accuracy to the percentages specified by the selected formula.

The dosing of the base glaze is performed with great accuracy thanks to the measurement of its volumetric mass, which makes it possible to calculate, on each occasion, the volume of base glaze to dispense, so that variations in the volumetric mass of the base glaze do not affect the final result which it is desired to obtain.

The apparatus according to the invention, not having to comprise a dosing head designed to contain the entire quantity of glaze to be prepared, is of much smaller dimensions than the apparatuses known from the state of the art and, being able to be moved easily thanks to the wheels 2, does not necessitate complex and cumbersome permanent connections to the storage tanks of the neutral glazes.

In practical implementation, the characteristics of the invention may be different from those set forth above, but technically equivalent to them, without departing from the scope of the present invention.

## Claims

1. Apparatus for dosing neutral glazes **characterised in that** it comprises a frame (1) to which a pump (3) and a volumetric mass measuring device (4) are fixed, said pump (3) being able to be connected to a storage tank of a neutral glaze by a conduit (5), said volumetric mass measuring device (4) being connected to the pump outlet (3) by a connecting conduit (6) and being further connected to a dispensing conduit (7).

2. Apparatus according to claim 1, wherein said dispensing conduit (7) comprises a dosing valve (8).

3. Apparatus according to claim 2, wherein said dosing valve (8) is a solenoid valve.

4. Apparatus according to any preceding claim, wherein said pump (3) is a pneumatic, peristaltic, or gear pump.

5. Apparatus according to any preceding claim, further comprising a control panel (9), operationally connected to the pump (3), to the volumetric mass measuring device (4) and to the dosing valve (8).

6. Apparatus according to claim 5, wherein in said control panel a management software is stored that is suitable for calculating the required amount of neutral glaze depending on the volumetric mass of the latter and of coloured glaze formulas to be made up.

7. Apparatus according to any preceding claim, wherein said frame (1) is provided with wheels (2).
